# EUROPEAN PATENT APPLICATION

(11) **EP 2 273 762 A1**
(43) Date of publication of application: **12.01.2011**
(21) Application number: 10177058.4
(22) Date of filing: 17.08.2004
(51) Int. Cl.: H04L 29/12

(54) **Method and apparatus for advertising a user interface for configuring, controlling and/or monitoring a service**

(30) Priority: 23.12.2003 US 746584
(62) Divisional of application: 04781564.2
(71) Applicant: APPLE INC., Cupertino, CA 95014 (US)
(72) Inventor: The designation of the inventor has not yet been filed
(74) Representative: Lang, Johannes

(57) **Abstract**

One embodiment of the present invention provides a system that advertises a user interface for controlling and/or monitoring a service. During operation, the system advertises the user interface, wherein the user interface is accessible through a web browser. This advertisement can be used to determine an address for a web server that supports the user interface. Next, the system receives a request from a client to access the user interface, wherein the request is received at the web server. In response to the request, the system communicates information between the web server and a web browser associated with the client to provide the user interface to a user of the client, thereby enabling the user to control and monitor the service through the web browser. In this way, the present invention makes it possible to access the user interface by simply responding to the advertisement, without having to manually enter the address of the web server.

## Description

### BACKGROUND

### 1. Field of the Invention

The present invention relates to computer networks. More specifically, the present invention relates to a method and an apparatus that advertises a user interface for configuring, controlling and/or monitoring a service.

### 2. Related Art

It is presently common for a "headless" network device (without a display and an input device), such as a printer or a DSL modem, to contain an embedded web server that supports a user interface for a service provided by the device. In this way, any client with a web browser can be used to configure, control and monitor the service through the user interface. This is an extremely convenient way to access a user interface because web browsers are generally available on any computing device on the network that possesses a display and an input device.

In the past, such headless devices typically provided a serial port that could be connected to a terminal to configure, control and monitor the device. Note that this manual process of connecting a specific type of terminal to the device was considerably less convenient than accessing a user interface through a web browser.

However, it is still relatively inconvenient to configure a browser to access a user interface for the device. The device typically comes preconfigured from the factory with a web server that resides at a fixed network address, such as an Internet Protocol (IP) address. The user must somehow obtain this address from the device manual, or from a website of the device manufacturer, and must manually enter the address into the browser in order to access the user interface. Although this task is relatively simple for a system a administrator to accomplish, it can be challenging for a novice user.

Moreover, this technique for obtaining the address can cause problems if the address for the device changes, which causes the address in the manual to be out-of-date, or if two devices on the same network have the same address. Furthermore, the preconfigured address is generally not a valid address on the local subnet. Consequently, the network settings of the client generally have to be changed, which is even more challenging for a novice user.

Hence, what is needed is a method and an apparatus that facilitates connecting a web browser on a client with a web server that provides a user interface for a service without the problems described above.

### SUMMARY

One embodiment of the present invention provides a system that advertises a user interface for controlling and/or monitoring a service. During operation, the system advertises the user interface, wherein the user interface is accessible through a web browser. This advertisement can be used to determine an address for a web server that supports the user interface. Next, the system receives a request from a client to access the user interface, wherein the request is received at the web server. In response to the request, the system communicates information between the web server and a web browser associated with the client to provide the user interface to a user of the client, thereby enabling the user to control and monitor the service through the web browser. In this way, the present invention makes it possible to access the user interface by simply responding to the advertisement, without having to manually enter the address of the web server.

In a variation on this embodiment, the client receives the advertisement and notifies the user of the availability of the user interface for the service. Next, in response to the user selecting the user interface, the client sends the request to access the user interface to the web server.

In a further variation, the client notifies the user of the availability of the user interface by displaying to the user a list of entities that the web browser is able to communicate with, wherein an entry in the list is associated with the web browser. This allows the user to select an entry from the list.

In a further variation, the client displays the list through an application that is separate from the web browser.

In a further variation, the client displays the list through the web browser.

In a further variation, the client displays the list through a plug-in that is incorporated into the web browser.

In a variation on this embodiment, prior to advertising the user interface, the system obtains the address for the web server. This can involve: obtaining a hardwired address from within a device that supports the web server; selecting the address randomly; or receiving the address from an entity that is responsible for assigning addresses on a local network.

In a variation on this embodiment, the advertising of the user interface takes place after a device that supports the service is powered on, wakes from a sleep state, is plugged into a network, associates with a wireless base station, or otherwise establishes new connectivity.

In a variation on this embodiment, a device that supports the service is a "headless device" that lacks a user interface for controlling and/or monitoring the service.

In a variation on this embodiment, the web server resides on a device that supports the service.

In a variation on this embodiment, the address for the web server includes an Internet Protocol (IP) address and port number.

In a variation on this embodiment, advertising the user interface involves sending a broadcast message or a multicast message over a network. In a further variation, the transmission of the broadcast or multicast message advertising the user interface is triggered by reception of a message from a device seeking this information.

### BRIEF DESCRIPTION OF THE FIGURES

FIG. 1 illustrates a device containing a web server and a client containing a web browser that supports a user interface or a service in accordance with another embodiment of the present invention.

FIG. 2 presents a flowchart illustrating the process of advertising a user interface for the service in accordance with an embodiment of the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The data structures and code described in this detailed description are typically stored on a computer readable storage medium, which may be any device or medium that can store code and/or data for use by a computer system. This includes, but is not limited to, magnetic and optical storage devices such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as the Internet.

### Device Containing a Web Server and a Client

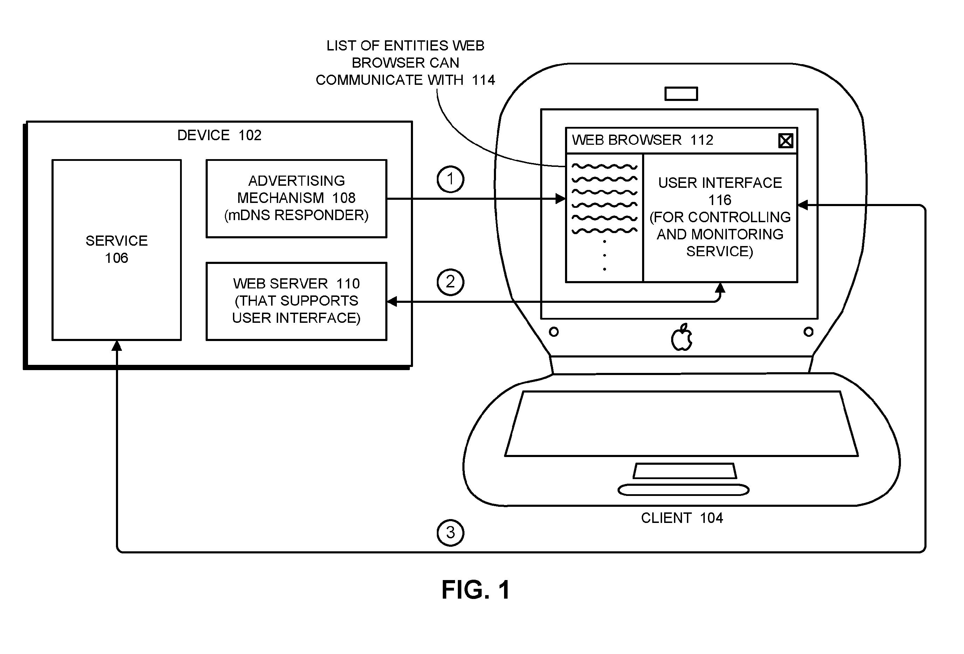

FIG. 1 illustrates a device 102 containing a web server 110 and a client 104 containing a web browser 122 that supports a user interface 116 in accordance with another embodiment of the present invention. As is illustrated in FIG. 1, device 102 communicates with client 104 through a network (not shown). This network can generally include any type of wire or wireless communication channel capable of coupling together devices and computing nodes. This includes, but is not limited to, a local area network, a wide area network, or a combination of networks. In one embodiment of the present invention, the network includes the Internet.

Client 104 can include any type of computing device or computer system that supports a web browser, which can include, but is not limited to, a computer system based on a microprocessor, a mainframe computer, a digital signal processor, a portable computing device, a personal organizer and a cell phone. As is illustrated in FIG. 1, client 104 provides a web browser 112 that can display a user interface 116, as well as a list of entities 114 that web browser 112 can communicate with.

Device 102 can include any type of networked device that can be configured, controlled and/or monitored through a user interface. Typically, device 102 is a "headless" device that lacks a suitable display and an input device for configuring, controlling and/or monitoring a service provided by the device. For example, device 102 can include, but is not limited to, a printer, a network gateway, a firewall, a DSL modem, a wireless base station, a headless file server, or a network-attached storage device.

As is illustrated in FIG. 1, device 102 includes hardware and/or software model that provides service 106. For example, if device 102 is a printer, service 106 provides a print service. Device 102 also includes an advertising mechanism 108 (which can be implemented as a multicast DNS responder) that advertises the presence of web server 110. In various embodiments of the present invention, this advertisement takes place through a multicast transmission or a broadcast transmission.

Device 102 also includes a web server 110, such as an HTTP web server, that supports a user interface 116 on web browser 112 in remote client 104. Note that user interface 116 can be used to configure, control and monitor service 106. For example, if service 106 is a print service, user interface 116 can be used to configure printer settings, to stop or start a print job, or to monitor the toner level and temperature in the associated printer.

### Process of Advertising a User Interface for a Service.

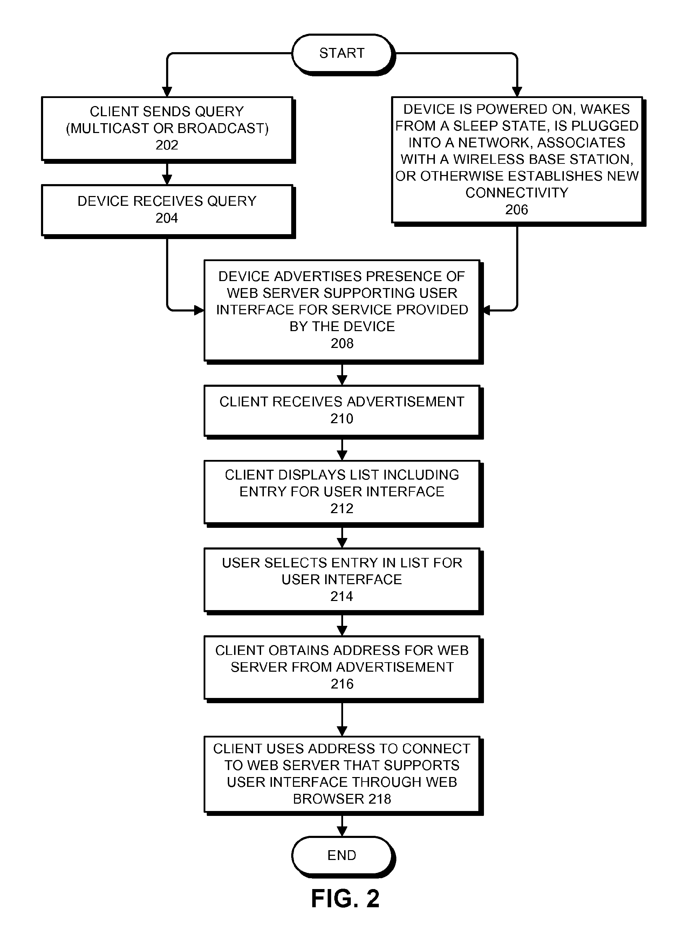

FIG. 2 presents a flowchart illustrating the process of advertising a user interface for a service in accordance with an embodiment of the present invention. As is illustrated in FIG. 2, the process can start in a number of ways. In one scenario, client 104 (from FIG. 1) sends a multicast or broadcast query across the network (step 202), and device 102 subsequently receives the query, which initiates the process (step 204). In another scenario, the process starts when device 206 is powered on, wakes from a sleep state, is plugged into a network, associates with a wireless base station, or otherwise establishes new connectivity (step 206).

Next, advertising mechanism 108 in device 102 advertises the presence of a web server 110 that supports a user interface 116 for configuring, controlling and/or monitoring service 106 in device 102. Note that this advertisement contains the address of web server 110 (or alternatively, contains information that can be used to obtain the address).

Upon receiving this advertisement (step 210), client 104 displays the list of entities 114 that can communicate with web browser 112, wherein the list 114 includes an entry for the web server 110 (step 212). In one embodiment of the present invention, list 114 is displayed by an application that is separate from web browser 110. In another embodiment, list 114 is displayed by web browser 112 itself. This can be accomplished by modifying an web browser 112 to display list 114, for example by incorporating a customized plug-in into web browser 112, or alternatively, by modifying web browser 112 in some other way. [0033] Next, a user of client 104 selects the entry in the list associated with the user interface (step 214). This causes client 104 to obtain the address (or URL) for web server 110 from the advertisement (step 216). Client 104 subsequently uses this address to connect to web server 110 through web browser 112 (step 218). This provides access to a user interface that enables a user of client 104 to configure, control and monitor service 106 within device 102.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

Although the invention can be defined as stated in the attached claims, it is to be understood that the present invention can alternatively also be defined as stated in the following embodiments:
1. A method for advertising a user interface for controlling and/or monitoring a service, comprising:
   advertising the user interface, wherein the user interface is accessible through a web browser, and wherein the advertisement can be used to determine an address for a web server that supports the user interface;
   receiving a request from a client to access the user interface, wherein the request is received at the web server; and
   in response to the request, communicating information between the web server and a web browser associated with the client to provide the user interface to a user of the client, thereby enabling the user to control and monitor the service through the web browser;
   whereby the user can access the user interface by simply responding to the advertisement, without having to manually enter the address of the web server.
2. The method of embodiment 1, wherein the method further comprises:
   receiving the advertisement at the client;
   notifying the user of the availability of the user interface for the service; and
   in response to the user selecting the user interface, sending the request to access the user interface to the web server.
3. The method of embodiment 2, wherein notifying the user of the availability of the user interface involves:
   displaying to the user a list of entities that the web browser is able to communicate with, wherein an entry in the list is associated with the web browser; and allowing the user to select an entry from the list.
4. The method of embodiment 3, wherein displaying the list involves displaying the list through an application that is separate from the web browser.
5. The method of embodiment 3, wherein displaying the list involves displaying the list through the web browser.
6. The method of embodiment 3, wherein displaying the list involves displaying the list through a plug-in that is incorporated into the web browser.
7. The method of embodiment 1, wherein prior to advertising the user interface, the method further comprises obtaining the address for the web server.
8. The method of embodiment 7, wherein obtaining the address can involve:
   obtaining a hardwired address from within a device that supports the web server;
   selecting the address randomly; or
   receiving the address from an entity that is responsible for assigning addresses on a local network.
9. The method of embodiment 1, wherein the advertising of the user interface takes place after a device that supports the service is powered on, wakes from a sleep state, is plugged into a network, associates with a wireless base station, or otherwise establishes new connectivity.
10. The method of embodiment 1, wherein a device that supports the service is a "headless device" that lacks a user interface for controlling and/or monitoring the service.
11. The method of embodiment 1, wherein the web server resides on a device that supports the service.
12. The method of embodiment 1, wherein the address for the web server includes an Internet Protocol (IP) address and port number.
13. The method of embodiment 1, wherein advertising the user interface involves sending a broadcast message or a multicast message over a network.
14. The method of embodiment 13, wherein the transmission of the broadcast or multicast message advertising the user interface is triggered by reception of a message from a device seeking this information
15. A method that facilitates advertising a user interface for controlling and/or monitoring a service, comprising:
   receiving, at a client, an advertisement for the user interface, wherein the user interface is accessible through a web browser on the client, and wherein the advertisement can be used to determine an address for a web server that supports the user interface;
   using the address to send a request to the web server to access the user interface; communicating information between the web server and a web browser associated with the client to provide the user interface to the user, thereby enabling a user of the client to control and monitor the service through the web browser;
   whereby the user can access the user interface by simply responding to the advertisement, without having to manually enter the address of the web server.
16. The method of embodiment 15, wherein sending the request to the web server involves:
   notifying the user of the availability of the user interface for the service; and in response to the user selecting the user interface, sending the request to access the user interface to the web server.
17. A computer-readable storage medium storing instructions that when executed by a computer cause the computer to perform a method for advertising a user interface for controlling and/or monitoring a service, the method comprising:
   advertising the user interface, wherein the user interface is accessible through a web browser, and wherein the advertisement can be used to determine an address for a web server that supports the user interface;
   receiving a request from a client to access the user interface, wherein the request is received at the web server; and
   in response to the request, communicating information between the web server and a web browser associated with the client to provide the user interface to a user of the client, thereby enabling the user to control and monitor the service through the web browser;
   whereby the user can access the user interface by simply responding to the advertisement, without having to manually enter the address of the web server.
18. A computer-readable storage medium storing instructions that when executed by a computer cause the computer to perform a method that facilitates advertising a user interface for controlling and/or monitoring a service, the method comprising:
   receiving, at a client, an advertisement for the user interface, wherein the user interface is accessible through a web browser on the client, and wherein the advertisement can be used to determine an address for a web server that supports the user interface;
   using the address to send a request to the web server to access the user interface; communicating information between the web server and the web browser associated with the client to provide the user interface to a user of the client, thereby enabling the user to control and monitor the service through the web browser; whereby the user can access the user interface by simply responding to the advertisement, without having to manually enter the address of the web server.
19. An apparatus that facilitates advertising a user interface for controlling and/or monitoring a service, comprising:
   an advertising mechanism configured to advertise the user interface, wherein the user interface is accessible through a web browser, and wherein the advertisement can be used to determine an address for a web server that supports the user interface; and
   a web server configured to,
   receive a request from a client to access the user interface, and
   in response to the request, to communicate information between the web server and a web browser associated with the client to provide the user interface to a user of the client, thereby enabling the user to control and monitor the service through the web browser;
   whereby the user can access the user interface by simply responding to the advertisement, without having to manually enter the address of the web server.
20. The apparatus of embodiment 19, further comprising an address obtaining mechanism, wherein prior to advertising the user interface, the address obtaining mechanism is configured to obtain the address for the web server.
21. The apparatus of embodiment 20, wherein the address obtaining mechanism is configured to:
   obtain a hardwired address from within a device that supports the web server; select the address randomly; or
   receive the address from an entity that is responsible for assigning addresses on a local network.
22. The apparatus of embodiment 19, wherein the advertising mechanism is configured to advertise the user interface after a device that supports the service is powered on, wakes from a sleep state, is plugged into a network, associates with a wireless base station, or otherwise establishes new connectivity.
23. The apparatus of embodiment 19, wherein a device that supports the service is a "headless device" that lacks a user interface for controlling and/or monitoring the service.
24. The apparatus of embodiment 19, wherein the web server resides on a device that supports the service.
25. The apparatus of embodiment 19, wherein the address for the web server includes an Internet Protocol (IP) address and port number.
26. The apparatus of embodiment 19, wherein while sending the advertisement, the advertising mechanism is configured to send a broadcast message or a multicast message over a network.
27. The apparatus of embodiment 26, wherein the transmission of the broadcast or multicast message advertising the user interface is triggered by reception of a message from a device seeking this information
28. An apparatus that facilitates advertising a user interface for controlling and/or monitoring a service, comprising:
   a client;
   a receiving mechanism within the client configure to receive an advertisement for the user interface, wherein the user interface is accessible through a web browser on the client, and wherein the advertisement can be used to determine an address for a web server that supports the user interface;
   a request mechanism within the client configured to send a request to the web server to access the user interface; and
   a web browser within the client configured to communicate information with the web server to provide the user interface to a user of the client, thereby enabling the user to control and monitor the service through the web browser;
   whereby the user can access the user interface by simply responding to the advertisement, without having to manually enter the address of the web server.
29. The apparatus of embodiment 28, wherein the request mechanism is configured to:
   notify the user of the availability of the user interface for the service; and in response to the user selecting the user interface, to send the request to access the user interface to the web server.
30. The apparatus of embodiment 28, wherein while notifying the user of the availability of the user interface, the request mechanism is configured to:
   display to the user a list of entities that the web browser is able to communicate with, wherein an entry in the list is associated with the web browser; and to allow the user to select an entry from the list.
31. The apparatus of embodiment 28, wherein displaying the list involves displaying the list through an application that is separate from the web browser.
32. The apparatus of embodiment 28, wherein displaying the list involves displaying the list through the web browser.
33. The apparatus of embodiment 28, wherein displaying the list involves displaying the list through a plug-in that is incorporated into the web browser.

## Claims

1. A method for advertising a user interface for configuring, controlling, or monitoring a service provided by a device, comprising, at the device:
sending an advertisement about the user interface, wherein the advertisement includes information for determining an address for accessing a server in the device that supports the user interface;
receiving a request to access the user interface from a client, wherein the request is received from the client at the server at an address that was determined by the client using the information in the advertisement; and
transmitting information from the server to the client to enable an application in the client to display the user interface to a user of the client, wherein the user configures, controls, or monitors the service provided by the device using the user interface displayed by the application.

2. The method of claim 1, wherein the application is one of:
a web browser; or
an application that is configured to present the user interface to a user.

3. The method of claim 2, wherein the method further comprises:
at the client,
receiving the advertisement;
notifying the user of the availability of the user interface;
receiving a selection of the user interface from the user; and
sending the request to access the user interface.

4. The method of claim 3, wherein notifying the user of the availability of the user interface includes displaying to the user a list of entities with which the application is able to communicate, wherein an entry in the list identifies the server in the device.

5. The method of claim 4, wherein displaying the list involves displaying the list through a plug-in that is incorporated into the web browser.

6. The method of claim 1, the method further comprises, at the device, prior to sending the advertisement, obtaining the address for the server.

7. The method of claim 6, wherein obtaining the address includes one of:
obtaining a preset address from within the device;
selecting the address randomly; or
receiving the address from an entity that is responsible for assigning addresses.

8. The method of claim 1, wherein the operation of sending the advertisement takes place after the device is powered on, wakes from a sleep state, is plugged into a network, associates with a wireless base station, or otherwise establishes connectivity.

9. The method of claim 1, wherein the device that supports the service is a "headless device" that lacks a user interface for controlling and/or monitoring the service.

10. The method of claim 1, wherein the address for the server includes an Internet Protocol (IP) address and port number.

11. The method of claim 1, wherein sending the advertisement about the user interface involves sending a broadcast message or a multicast message on a network to which both the device and the client are coupled.

12. The method of claim 11, wherein the broadcast or multicast message advertising the user interface is sent in response to receiving a message from a device seeking this information.

13. A method for configuring, controlling, or monitoring a service provided by a device through a user interface, comprising, in a client:
receiving an advertisement about the user interface, wherein the advertisement includes information for determining an address for accessing a server in the device that supports the user interface;
determining an address for the server using the information in the advertisement;
sending a request to access the user interface to the server at the determined address; and
receiving information from the server to enable an application in the client to display the user interface to a user, wherein the user configures, controls, or monitors the service provided by the device using the user interface displayed by the application.

14. The method of claim 13, wherein sending the request to the server involves:
notifying the user of the availability of the user interface for the service; and
in response to the user selecting the user interface, sending the request to access the user interface to the server.

15. A computer-readable storage medium storing instructions that when executed by a computer cause the computer to perform a method for advertising a user interface for configuring, controlling, or monitoring a service provided by a device, the method comprising, at the device:
sending an advertisement about the user interface, wherein the advertisement includes information for determining an address for accessing a server in the device that supports the user interface;
receiving a request to access the user interface from a client, wherein the request is received from the client at the server at an address that was determined by the client using the information in the advertisement; and
transmitting information from the server to the client to enable an application in the client to display the user interface to a user of the client, wherein the user configures, controls, or monitors the service provided by the device using the user interface displayed by the application.

16. A computer-readable storage medium storing instructions that when executed by a computer cause the computer to perform a method for configuring, controlling, or monitoring a service provided by a device through a user interface, the method comprising, in a client:
receiving an advertisement about the user interface, wherein the advertisement includes information for determining an address for accessing a server in the device that supports the user interface;
determining an address for the server using the information in the advertisement;
sending a request to access the user interface to the server at the determined address; and
receiving information from the server to enable an application in the client to display the user interface to a user, wherein the user configures, controls, or monitors the service provided by the device using the user interface displayed by the application.

17. An apparatus that advertises a user interface for configuring, controlling, or monitoring a service provided by a device, comprising:
a server that supports the user interface;
an advertising mechanism configured to send an advertisement about the user interface, wherein the advertisement includes information for determining an address for accessing the server;
wherein the server is configured to:
receive a request to access the user interface from a client, wherein the request is received at an address that was determined by the client using the information in the advertisement; and
transmit information from the server to the client to enable an application in the client to display the user interface to a user of the client, wherein the user configures, controls, or monitors the service using the user interface displayed by the application.

18. The apparatus of claim 17, further comprising an address-obtaining mechanism, wherein prior to advertising the user interface, the address-obtaining mechanism is configured to obtain the address for the server.

19. The apparatus of claim 18, wherein the address-obtaining mechanism is configured to:
obtain a preset address from within the device;
select the address randomly; or
receive the address from an entity that is responsible for assigning addresses.

20. The apparatus of claim 17, wherein the advertising mechanism is configured to advertise the user interface after the device is powered on, wakes from a sleep state, is plugged into a network, associates with a wireless base station, or otherwise establishes connectivity.

21. The apparatus of claim 17, wherein the device is a "headless device" that lacks a user interface for controlling and/or monitoring the service.

22. The apparatus of claim 17, wherein the address for the server includes an Internet Protocol (IP) address and port number.

23. The apparatus of claim 17, wherein while sending the advertisement, the advertising mechanism is configured to send a broadcast message or a multicast message on a network to which the device and the client are coupled.

24. The apparatus of claim 23, wherein the broadcast or multicast message advertising the user interface is sent in response to receiving a message from a device seeking this information.

25. An apparatus for configuring, controlling, or monitoring a service provided by a device through a user interface, comprising:
a client;
a receiving mechanism configured to receive an advertisement about the user interface, wherein the advertisement includes information for determining an address for accessing a server in the device that supports the user interface;
a request mechanism configured to determine an address for the server using the information in the advertisement, and send a request to access the user interface to the server at the determined address; and
an application in the client configured to receive information from the server to enable the application to display the user interface to a user, wherein the user configures, controls, or monitors the service provided by the device using the user interface displayed by the application.

26. The apparatus of claim 25, wherein the application is one of:
a web browser; or
an application that is configured to present the user interface to a user.

27. The apparatus of claim 26, wherein the request mechanism is configured to:
notify the user of the availability of the user interface for the service; and
in response to the user selecting the user interface, to send the request to access the user interface to the server.

28. The apparatus of claim 27, wherein while notifying the user of the availability of the user interface, the request mechanism is configured to display to the user a list of entities with which the application is able to communicate, wherein an entry in the list identifies the server in the device

29. The apparatus of claim 28, wherein displaying the list involves displaying the list through a plug-in that is incorporated into the web browser.
